# EUROPÄISCHE PATENTANMELDUNG

(11) **EP 1 089 576 A1**
(43) Veröffentlichungstag der Anmeldung: **04.04.2001**
(21) Anmeldenummer: 00120406.4
(22) Anmeldetag: 18.09.2000
(51) Int. Cl.: H04Q 3/00

(54) **Netzwerkverwaltung**

(30) Priorität: 30.09.1999 DE 19947084
(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft die Nachrichtenübertragung an einer Manager-Agent-Schnittstelle beim impliziten Generieren bzw. Löschen von Objektinstanzen in einer objekt-orientierten Umgebung. Bei diesem im Agent impliziten Bearbeiten von mehreren Objektinstanzen werden mehrere Objektbearbeitungs-Benachrichtigungen, die Informationen über die Bearbeitung enthalten, zwischen Manager und Agent übermittelt.

Zur Reduzierung der über die Schnittstelle übertragenen Datenmenge werden vom Agent zum Manager einzelne Objektbearbeitungs-Benachrichtigungen übermittelt, die für den Bereich des Managers Informationen enthalten, die jeweils mehrere implizit im Agentenbereich erzeugte bzw. gelöschte Objektinstanzen betreffen. Im Managerbereich wird entsprechend aufgrund einer einzigen zu diesem übermittelten Objektbearbeitungs-Benachrichtigung eine der im Agentenbereich erzeugten bzw. gelöschten Objektinstanzen entsprechende Anzahl von Objekterzeugungs- bzw. Objektlöschung-Nachrichten für den Operator erzeugt.

## Beschreibung

Die Erfindung betrifft die Nachrichtenübertragung an einer Manager-Agent-Schnittstelle beim impliziten Generieren bzw. Löschen von Objektinstanzen gemäß den oberbegrifflichen Merkmalen des Patentanspruchs 1.

Die Prinzipien eines allgemeinen Managementnetzes, die auch als TMN-Prinzipien (TMN: Telecommunications Management Network) bezeichnet werden, definieren mehrere Managementebenen für das Management eines Kommunikationssystems - beispielsweise eines Mobil-Kommunikationssystems -, wobei jede Ebene eine doppelte Funktion hat. Im managenden System hat jede Ebene außer der untersten eine Managerfunktion für die darunterliegende Ebene. Im gemanagten System hat jede Ebene außer der obersten eine Agentenfunktion für die nächst höhere Ebene.

In einer objekt-orientierten Umgebung gibt es eine Vielzahl von Objekten mit jeweils einer bestimmten Funktionalität. Bei der objekt-orientierten Umgebung, wie sie typischerweise zwischen Manager und Agent in einem Mobilfunknetz besteht, wird entsprechend jede Agent-Funktionalität von einem bestimmten Objekt bereitgestellt, das als gemanagtes Objekt (bzw. Objekt-Instanz) einer Objektklasse verfügbar ist.

Das Objekt entsteht als Ergebnis einer Modellierungs-Tätigkeit, bei der neben der Funktionalität u.a. die Parameter und Rahmenbedingungen definiert werden, und ist sowohl dem Manager als auch dem ausführenden Agent an der entsprechenden Schnittstelle bekannt. Die Schnittstelle kann z.B. bei einem Mobilfunknetz die sogenannte O-Schnittstelle zwischen einem Betriebs- und Wartungszentrum (OMC) und einem Basisstationssystem (BSS) sein.

Eine Objektinstanz einer bestimmten gemanagten Klasse A, die auch als managed object class bezeichnet wird, kann weitere Objektinstanzen derselben oder anderer Klassen enthalten. Eine solche Beziehung zwischen Objektinstanzen - nicht Klassen - wird in der Modellierung auch als Einschließungsbeziehung bzw. "containment relationship" bezeichnet.

Eine Beziehung zwischen Objektklassen, die spezifiziert, daß eine Objektinstanz einer Klasse als übergeordnetes (SUPERIOR) Objekt für Objekte einer anderen Klasse definiert ist oder definiert sein kann, wird auch als Bezeichnungsbindung bzw. "NAME BINDING" bezeichnet. Eine hierarchische Zuordnung von Objekten, in der die Hierarchie auf Grundlage von NAME-BINDING-Beziehungen organisiert ist, wird allgemein als Bezeichnungsbaum bzw. "naming tree" bezeichnet.

Üblicherweise wird eine neue Objektinstanz im Agent explizit generiert. Dies erfolgt mit Hilfe bzw. nach dem Empfang eines entsprechenden Erzeuge- bzw. CREATE-Kommandos (gemäß Standard ITU-T X.710 "Common Management Information Service Definition"), das vom Manager über die Manager-Agent-Schnittstelle zum Agent gesendet wird.

Die CREATE-Operation erzeugt ein Objekt einer spezifischen Objektklasse nur dann, wenn das übergeordnete Objekt (containing managed object), das zumindest ein anderes Objekt enthält bzw. enthalten soll, schon vorhanden ist.

Üblicherweise wird eine nicht mehr benötigte Objektinstanz auch explizit gelöscht, und zwar vergleichsweise der Erzeugung. Entsprechend erfolgt das Löschen mit Hilfe eines entsprechenden Lösche- bzw. DELETE-Kommandos, das vom Manager über die Manager-Agent-Schnittstelle zum Agent gesendet wird.

Wenn eine Objektinstanz ein DELETE-Kommando empfängt, wird zunächst festgestellt, ob andere Objekte in dem zu löschenden Objekt enthalten sind. Wenn die zu löschende Objektinstanz weitere Objekte enthält, hängt das Lösch-Verhalten von den Definitionen der Objektklasse und des NAME-BINDINGs ab. In der Regel kann die zu löschende Objektinstanz entweder alle enthaltenen Objekte mitlöschen oder sie kann das Kommando solange ablehnen, bis alle enthaltenen Objekte durch entsprechende Kommandos gelöscht worden sind.

Weil die Konfiguration eines Mobilfunk-Netzes sehr umfangreich ist und um diese aufwendige Konfigurierung für den Operator zu erleichtern, wird bei bestimmten Objektklassen-Beziehungen das sogenannte implizite Generieren bzw. Löschen von Objektinstanzen verwendet.

Zum Beispiel generiert der Agent (BSS) beim Empfang eines (expliziten) CREATE-Kommandos vom Manager (OMC) für eine neue bts-Instanz automatisch, also implizit, zusätzlich jeweils eine Instanz der Klassen Übergabesteuerung bzw. handoverControl und Leistungssteuerung bzw. powerControl. Dabei ist bts eine standardisierte Objektklasse in der GSM-Welt (bts: base transceiver station). Umgekehrt, beim Löschen einer bts-Instanz werden implizit auch die vorher automatisch generierten handoverControl- und powerControl-Instanzen gelöscht.

Bei einer anderen beispielhaften Anwendung erzeugt der Agent (BSS) beim Empfang eines (expliziten) CREATE-Kommandos vom Manager (OMC) für eine neue PCM-Schaltungs- bzw. pcmCircuit-Instanz auf der A-Schnittstelle automatisch implizit 32 Instanzen der Klasse Zeitschlitz A bzw. timeSlotA zur Verwaltung von Zeitschlitzen eines Kanals. Umgekehrt werden beim späteren Löschen einer pcmCircuit-Instanz implizit auch die 32 vorher automatisch generierten timeSlotA-Instanzen gelöscht.

Das bisherige implizite Generieren bzw. Löschen von Objektinstanzen hat jedoch zwei große Nachteile. Erstens wird das Verfahren nicht durch Modellierungs-Techniken unterstützt, wie dies im Standard ITU-T X.722 "Guidelines for the Definition of Managed Objects" (ITU-T: International Telecommunication Union - Telecommunication sector) definiert ist, sondern nur durch spezielle Vereinbarungen zwischen den Entwicklern vom Manager- und Agent-System ermöglicht.

Zweitens erleichtert das Verfahren zwar die Arbeit von Netzbetreibern, indem z.B. mit einem einzigen CREATE-Kommando für eine pcmCircuit-Instanz weitere 32 timeSlotA-Instanzen automatisch kreiert werden. Anschließend sendet der Agent, da nur in diesem Objekte bzw. Objektinstanzen einer bestimmten Objektklasse erzeugt (bzw. gelöscht) werden, aber insgesamt 33 Objekterzeugungs-Benachrichtigungen bzw. objectCreation-Notifications (bzw. beim Löschen Objektlöschungs-Nachrichten / objectDeletionNotifications) über die OMC-BSS-Schnittstelle, was im normalen Betrieb eine erhebliche Belastung darstellt.

Im Mobilfunksystem der Anmelderin werden z.B. beim impliziten Generieren bzw. Löschen von Objektinstanzen alle entsprechenden objectCreation bzw. objectDeletion Notifications vom Agent (BSS) an den Manager (OMC) übertragen, d.h. die O-Schnittstelle wird im normalen Betrieb stark belastet. Dadurch können andere, unter Umständen wichtigere Meldungen den Manager nur verspätet oder sogar gar nicht erreichen.

Der Erfindung liegt die Aufgabe zugrunde, Verfahren und Funk-Kommunikationssysteme bereitzustellen, welche die Nachrichtenübertragung an einer Manager-Agent-Schnittstelle beim impliziten Generieren bzw. Löschen von Objektinstanzen verbessern.

Diese Aufgabe wird durch das Verfahren mit den Merkmalen des Anspruchs 1 bzw. das Kommunikationssystem mit den Merkmalen des Anspruchs 9 gelöst.

Vorteilhafte Weiterbildungen sind Gegenstand von Unteransprüchen.

Der Betreiber bzw. Operator am Managersystem (OMC) erhält letztendlich Objekt-Erzeugungs-Benachrichtigungen für alle tatsächlich neu erzeugten Objektinstanzen, obwohl über die Manager-Agent-Schnittstelle eine wesentlich geringere Anzahl von Objekt-Erzeugungs-Benachrichtigungen, vorzugsweise nur eine einzige Objekt-Erzeugungs-Benachrichtigung übertragen worden ist. Beim Löschen von Objektinstanzen erhält er entsprechend nur wenige Objektlöschungs-Benachrichtigungen, vorzugsweise nur eine einzige.

Das Bearbeiten von Objektinstanzen betrifft hier vorzugsweise grundlegende Änderungen im System, nämlich insbesondere das Erzeugen und Löschen von Objektinstanzen im Agentenbereich und entsprechende Auswirkungen im Managerbereich. Der Managerbereich ist dabei nicht direkt auf den Manager beschränkt, sondern umfaßt auch übergeordnete, untergeordnete oder parallele Bereiche, die vom Manager oder über diesen verwaltet oder informiert werden.

Die zu übertragenden Informationen betreffen insbesondere Attribute eines benutzten Referenz-Objektes und/oder Identifikationsinformationen dazu.

Das Verfahren zum implizites Erzeugen/Löschen von Objektinstanzen im Agent erfolgt somit insbesondere durch eine Erweiterung der "NAME BINDING"-Standarddefinitionen, und zwar ohne entsprechende Manager-Kommandos (CREATE / DELETE). Dadurch kann der Agent dynamisch, abhängig vom Parameterwert noOfInstances, eine variable Anzahl von Instanzen implizit erzeugen und nicht mehr wie bislang nur eine feste Anzahl, die durch Vereinbarungen zwischen Entwicklern auf der Manager- bzw. Agent-Seite vor der Implementierung getroffen werden muss.

Die Optimierung/Reduzierung der Nachrichtenübertragung an der Manager-Agent-Schnittstelle ist insbesondere beim Konfigurieren von großen Telekommunikationsnetzen vorteilhaft. Besonders effektiv ist der Einsatz bei Mobilfunk-Netzen, wo die Kapazität von Übertragungskanälen begrenzt ist.

Nachfolgend wird ein Ausführungsbeispiel anhand der Zeichnung näher erläutert. Es zeigen:

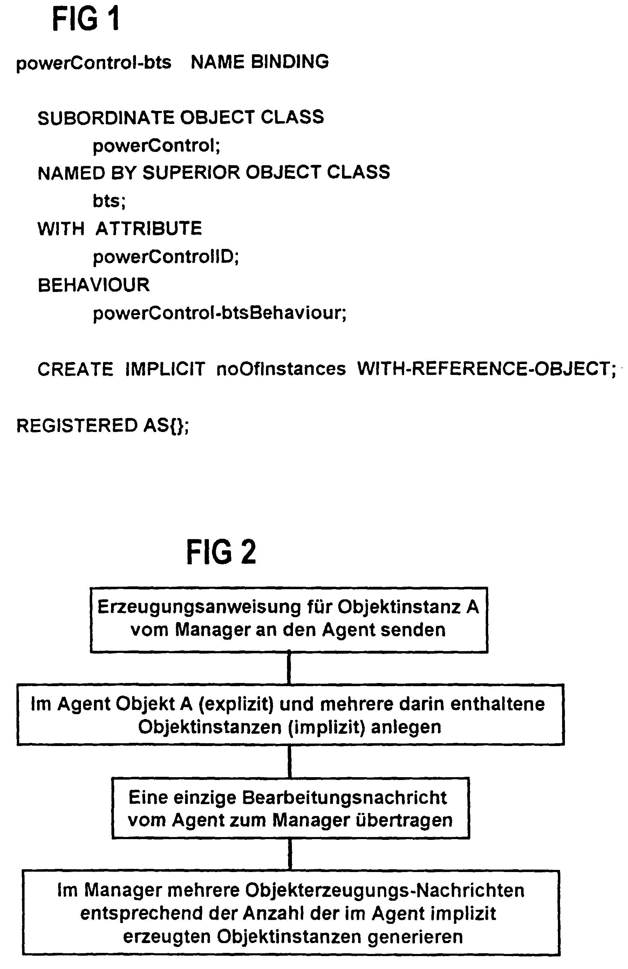

- Fig. 1: eine algorithmische Definition zum impliziten Erzeugen einer Objektinstanz im Agentenbereich und
- Fig. 2: ein Ablaufdiagramm für das implizite Erzeugen einer Objektinstanz im Agentenbereich und das automatische Generieren der Erzeugungsnachrichten für den Operator im Managerbereich.

Das Ausfuhrungsbeispiel beschreibt die Erfindung anhand eines beispielhaften TMN-Konzeptes (TMN: Telecommunications Management Network) für das Management eines Mobil-Kommunikationssystems, das beispielsweise Netzeinrichtungen eines Mobilfunknetzes nach dem UMTS- oder dem GSM-Standard (UMTS: Universal Mobile Telecommunication System; GSM: Global System for Mobile communication) aufweist. Das Konzept ist aber nicht auf Mobilfunknetze beschränkt, sondern läßt sich auf andere Systeme, insbesondere Telekommunikationsnetze jeder Art anwenden, die eine Manager-Agent-Beziehung haben.

Ein Mobil-Kommunikationssystem ist ein hierarchisch gegliedertes System verschiedener Netzeinrichtungen, bei dem die unterste Hierarchiestufe von den Mobilstationen gebildet wird. Diese Mobilstationen kommunizieren über eine Funkschnittstelle mit Funkstationen, die die nächste Hierarchieebene bilden und als Basisstationen bezeichnet werden. Die beispielsweise Mobilstationen in einem Funkbereich einer Funkzelle versorgenden Basisstationen sind vorzugsweise zur Abdeckung eines größeren Funkgebiets zusammengefaßt und mit übergeordneten Netzeinrichtungen, den Basisstationssteuerungen verbunden. Die Basisstationen und Basisstationssteuerungen gehören zu einem Basisstationssystem (BSS: Base Station Subsystem) des Mobil-Kommunikationssystems. Die Basisstationssteuerungen kommunizieren über definierte Schnittstellen mit einer oder mehreren Vermittlungseinrichtungen, den Mobilvermittlungsstellen, über die u.a. auch der Übergang zu anderen Kommunikationsnetzen erfolgt. Die Mobilvermittlungsstellen bilden gemeinsam mit einer Mehrzahl von Datenbanken das Vermittlungssystem (Switching Subsystem) des Mobil-Kommunikationssystems.

Neben den obigen Netzeinrichtungen existieren ein oder mehrere Betriebs- und Wartungszentren (Operation and Maintenance Centers), die u.a. zum Konfigurieren und Überwachen der Netzeinrichtungen dienen. Überwachungsmaßnahmen und Konfigurierungsmaßnahmen werden hierzu meist von einem der Betriebs- und Wartungszentren aus ferngesteuert, die üblicherweise im Bereich der Mobilvermittlungsstellen angeordnet sind. Ein Betriebs- und Wartungszentrum kommuniziert dabei jeweils mit einem Basisstationssystem oder Vermittlungssystem über eine definierte Schnittstelle. Eine weitere Aufgabe des Betriebs- und Wartungssystems ist die Durchführung des Konfigurationsmanagements (Configuration Management), das neben dem Fehlermanagement einen von fünf Managementfunktionsbereichen darstellt, die die TMN-Prinzipien identifizieren. Das Konfigurationsmanagement definiert eine Reihe von Diensten, die eine Änderung der Struktur und damit des Verhaltens eines Telekommunikationsnetzes durch den Bediener ermöglichen. Diese Dienste beziehen sich immer auf Klassen und/oder Instanzen von gemanagten Objekten, die insgesamt die netzspezifische Managementinformationsbasis bilden.

Ein gemanagtes Objekt im Sinne des Konfigurationsmanagements ist eine logische Abstraktion einer Ressource im Mobil-Kommunikationssystem. Hierbei wird unterschieden zwischen hardware-bezogenen gemanagten Objekten, die eine herstellerspezifische Realisierung einer Funktion beschreiben, und funktionsbezogenen gemanagten Objekten, bei denen es sich jeweils um die Abstraktion einer herstellerunabhängigen Funktionalität handelt.

Die verbesserte Bearbeitung von Objektinstanzen eines Mobil-Kommunikationssystems wird im folgenden anhand des Generierens einer neuen Objektinstanz erläutert. Das Löschen einer Objektinstanz erfolgt in vergleichbarer Art und Weise.

Als Grundlage werden die in ITU-T X.722 definierten Modellierungs-Prinzipien um ein Schlüsselwort für die NAME-BINDING-Definition erweitert. Dieses Schlüsselwort ermöglicht eine automatische Koordinierung zwischen Manager und Agent und wird zweckmäßigerweise in entsprechende Standards aufgenommen.

Für die im Agent implizit zu erzeugenden bzw. zu löschenden Objektinstanzen werden die vom Operator benötigten dazugehörigen Objekt-Erzeugungs- bzw. Objekt-Löschungs-Benachrichtigungen (objectCreation- bzw. objectDeletion-Notifications) vom Manager automatisch generiert. Sie müssen also nicht mehr über die dazugehörige Manager-Agent-Schnittstelle übertragen werden.

Beim vorliegenden Ausführungsbeispiel wird die Definition jeder NAME-BINDING-Beziehung zwischen der übergeordneten (superior) Objektklasse auf einer Seite und der jeweiligen darin enthaltenen Objektklasse, deren Instanzen vom Agent implizit zu generieren sind, auf der anderen Seite um die Zeile
CREATE IMPLICIT noOfInstances WITH-REFERENCE-OBJECT;
erweitert. Das neue Schlüsselwort "IMPLICIT" gibt an, daß Instanzen der untergeordneten (subordinate) Objektklasse vom Agent implizit zu generieren sind. Dies erfolgt üblicherweise unter Verwendung des angegebenen Referenz-Objektes (z.B. powerControl). Der Parameter "noOfInstances" gibt in Verbindung mit dem Schlüsselwort "IMPLICIT" an, wieviele Instanzen dieser untergeordneten Objektklasse vom Agent implizit generiert werden sollen.

Im Agent werden bei dem in den Figuren dargestellten Beispiel nach Empfang des vom Manager übermittelten CREATE-Kommandos für die beispielhafte SUPERIOR Objektklasse bts (Objektinstanz A) die folgenden Aktionen ausgeführt:

Zuerst wird im Agent explizit eine Instanz der übergeordneten Objektklasse (SUPERIOR OBJECT CLASS) bts (bzw. Objekt A) erzeugt.

Anhand der NAME-BINDING-Definitionen, die in der Darstellung als übergeordnete Objektklasse (SUPERIOR OBJECT CLASS) die Objektklasse bts haben, generiert der Agent daraufhin implizit, d.h. ohne ein weiteres vorheriges Manager-Kommando, entsprechend der Definition eine oder mehrere Objektinstanzen der untergeordneten Objektklasse (SUBORDINATE OBJECT CLASS), hier beispielsweise "powerControl", die im übergeordneten Objekt A enthalten sind. Unter Benutzung des jeweiligen Parameterwertes von "noOfInstances" wird dabei eine entsprechende Anzahl von Instanzen für jede untergeordnete Objektklasse (z.B. 32 powerControl-Instanzen) erzeugt. Die Eigenschaften der implizit erzeugten Objektinstanzen werden dabei vom sogenannten Referenz-Objekt bestimmt.

Nach der erfolgreichen expliziten Generierung des Objektes A und der impliziten Generierung aller untergeordneten Instanzen sendet der Agent zum Manager vorzugsweise nur eine einzige standardisierte Objekt-Erzeugungs-Benachrichtigung (objectCreation-Notification), für die übergeordnete Objektklasse - hier bts.

Der Manager wertet die vorzugsweise einzige über die Manager-Agent-Schnittstelle empfangene Objekt-Erzeugungs-Benachrichtigung, die hier z.B. bts-bezogen ist, aus. Daraufhin erzeugt der Manager seinerseits unter Berücksichtigung der "NAME BINDING"-Definitionen im Informationsmodell, die hier als "SUPERIOR OBJECT CLASS" die Objektklasse bts haben, automatisch für jede im Agent implizit generierte Instanz jeweils eine Objekt-Erzeugungs-Benachrichtigung, wobei deren Anzahl dem Parameterwert "noOfInstances" entspricht. Hier werden also z.B. 32 objectCreation-Notifications erzeugt, die sich auf powerControl-Objektinstanzen beziehen. Die Objekt-Erzeugungs-Benachrichtigung hat hier z.B. die Parameter:
* "Attribut-Liste" und
* "Korrelierende Benachrichtigungen" bzw. "Correlated Notifications".

"Attribut-Liste" enthält die Attribute gemäß der Definition des benutzten Referenz-Objektes und "Correlated Notifications" enthält das Benachrichtigungs-Identifizierungsmerkmal (NotificationIdentifier) der vom Agent gesendeten Objekt-Erzeugungs-Benachrichtigung.

Der Betreiber bzw. Operator am Managersystem (OMC) erhält somit letztendlich Objekt-Erzeugungs-Benachrichtigungen für alle tatsächlich im Agent neu erzeugten Objektinstanzen, obwohl über die Manager-Agent-Schnittstelle vorzugsweise nur eine einzige Objekt-Erzeugungs-Benachrichtigung übertragen worden ist.

Das ganze Verfahren basiert also auf einer "versteckten" Verständigung zwischen Manager und Agent, die durch die zusätzliche Zeile in der standardisierten "NAME BINDING"-Definition ermöglicht wird.

Das Löschen von Objektinstanzen erfolgt mit einer vergleichbaren Vorgehensweise.

Dieses Prinzip ist insbesondere auch nicht nur spezifisch für das Management von Mobilfunk-Netzen, sondern kann an jeder anderen Manager-Agent-Schnittstelle in einer objekt-orientierten Umgebung eingesetzt werden.

## Patentansprüche

1. Verfahren zur Nachrichtenübertragung an einer Manager-Agent-Schnittstelle, wobei beim impliziten Erzeugen oder Löschen von zumindest einer von mehreren Objektinstanzen eine oder mehrere Objektbearbeitungs-Benachrichtigungen, die Informationen über das Erzeugen bzw. Löschen enthalten, zwischen Manager und Agent übermittelt werden,
dadurch gekennzeichnet,
daß zumindest eine Objektbearbeitungs-Benachrichtigung zwischen Manager und Agent ausgetauscht wird, insbesondere vom Agent zum Manager übermittelt wird, die für den Bereich des Managers Informationen enthält, die zumindest eine im Agentenbereich implizit erzeugte oder gelöschte Objektinstanz betrifft.

2. Verfahren nach Anspruch 1, bei dem
im Managerbereich aufgrund einer zu diesem übermittelten Objektbearbeitungs-Benachrichtigung eine der im Agentenbereich erzeugten bzw. gelöschten Objektinstanzen entsprechende Anzahl von Objekterzeugungs-Nachrichten (objectCreation-Notifications) bzw. Objektlöschungs-Nachrichten (objectDeletion-Notifications) erzeugt wird.

3. Verfahren nach Anspruch 1 oder 2, bei dem
die zumindest eine vom Agent zum Manager übermittelte Objektbearbeitungs-Benachrichtigung für das Management in einer objekt-orientierten Umgebung verwendet wird.

4. Verfahren nach einem vorstehenden Anspruch, bei dem
die zumindest eine vom Agent zum Manager übermittelte Objektbearbeitungs-Benachrichtigung für das Management von Kommunikationssystemen, insbesondere Mobilfunk-Netzen verwendet wird.

5. Verfahren nach einem vorstehenden Anspruch, bei dem
das Erzeugen von Objektinstanzen im Agentenbereich nachfolgend das automatische Erzeugen von entsprechenden Objekterzeugungs-Benachrichtigungen im Managerbereich umfaßt.

6. Verfahren nach einem der Ansprüche 1 bis 4, bei dem
das Löschen von Objektinstanzen im Agentenbereich nachfolgend das automatische Erzeugen von entsprechenden Objektlöschungs-Benachrichtigungen im Managerbereich umfaßt.

7. Verfahren nach einem vorstehenden Anspruch, bei dem
die "NAME BINDING"-Standarddefinition für Objekterzeugungs- bzw. Objektlöschungs-Benachrichtigungen um einen Parameterwert (noOfInstances) derart erweitert wird, daß eine variable Anzahl von Objektinstanzen beim Erzeugen bzw. Löschen im Agent implizit erzeugt bzw. gelöscht wird.

8. Verfahren nach einem vorstehenden Anspruch, bei dem
die Benachrichtigungen Informationen über Attribute eines benutzten Referenz-Objektes und/oder Identifikationsinformationen (NotificationIdentifier) aufweisen.

9. Kommunikationssystem, insbesondere zum Durchführen eines Verfahrens nach einem der vorstehenden Ansprüche, mit
- zumindest einem Manager und
- zumindest einem Agenten in einer objekt-orientierten Umgebung mit mehreren Objektinstanzen,
- zumindest einer Schnittstelle, über die Manager und Agent Objekterzeugungs- bzw. Objektlöschungs-Benachrichtigungen übermitteln, die Informationen über die Bearbeitung von Objektinstanzen enthalten, und
- zumindest einer Benachrichtigungs-Verwaltungseinrichtung zum Verwalten der Objekterzeugungs- bzw. Objektlöschungs-Benachrichtigungen,
dadurch gekennzeichnet,
daß die zumindest eine Benachrichtigungs-Verwaltungseinrichtung zum Verwalten von vom Agent zum Manager übermittelten Objekterzeugungs- bzw. Objektlöschungs-Benachrichtigungen, die jeweils Informationen zu mehreren bearbeiteten Objektinstanzen enthalten, im Bereich des Managers oder eines diesem übergeordneten Managers ausgelegt ist.

10. Kommunikationssystem nach Anspruch 9, bei dem
die zumindest eine Benachrichtigungs-Verwaltungseinrichtung derart zum Erzeugen einer Vielzahl von Objekterzeugungs- bzw. Objektlöschungs-Nachrichten im Managerbereich nach dem Empfang einer vom Agent zum Manager übermittelten Objekterzeugungs- bzw. Objektlöschungs-Benachrichtigung ausgelegt ist, daß für jede im Agentenbereich erzeugte bzw. gelöschte Objektinstanz eine entsprechende Objekterzeugungs-bzw. Objektlöschungs-Benachrichtigung erzeugt wird.

11. Kommunikationssystem nach Anspruch 9 oder 10, das als Funk-Kommunikationssystem ausgebildet ist.
